# EUROPÄISCHE PATENTSCHRIFT

(11) **EP 2 145 122 B1**
(45) Veröffentlichungstag und Bekanntmachung des Hinweises auf die Patenterteilung: **17.11.2010**
(21) Anmeldenummer: 08749687.3
(22) Anmeldetag: 24.04.2008
(51) Int. Cl.: F16H 3/66

(54) **MEHRSTUFENGETRIEBE**
MULTI-STEP TRANSMISSION
TRANSMISSION À RAPPORTS MULTIPLES

(30) Priorität: 15.05.2007 DE 102007022776
(43) Veröffentlichungstag der Anmeldung: 20.01.2010
(73) Patentinhaber: ZF Friedrichshafen AG, 88038 Friedrichshafen (DE)
(72) Erfinder: GUMPOLTSBERGER, Gerhard, 88045 Friedrichshafen (DE)
(86) Internationale Anmeldenummer: PCT/EP2008/054966
(87) Internationale Veröffentlichungsnummer: WO 2008/138723

(56) Entgegenhaltungen:
- WO-A-2004/007996
- US-A1- 2003 054 917
- US-A1- 2003 195 079

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1, und wie es aus der US 2003195079 A bekannt ist.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler, oder einer Strömungskupplung verbunden sind.

Ein derartiges Getriebe geht aus der EP 0 434 525 A1 hervor. Es umfasst im Wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im Wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlamellenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Aus der DE 199 12 480 A1 ist ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist, und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Des weiteren ist aus der DE 102 13 820 A1 ein Mehrgangautomatikgetriebe bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element R3 gekoppelt ist.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens sieben Vorwärtsgänge ohne Gruppenschaltung schaltbar sind. Der Vorschaltsatz wird aus einem Vorschalt-Planetenradsatz oder maximal zwei nicht schaltbaren, mit dem ersten Vorschalt-Planetenradsatz gekoppelten Vorschalt-Planetenradsätzen gebildet, wobei der Nachschaltsatz als Zweisteg-Vierwellen-Getriebe mit zwei schaltbaren Nachschalt-Planetenradsätzen ausgebildet ist und vier freie Wellen aufweist. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement (D') und die erste freie Welle zusätzlich mit einem siebten Schaltelement zu verbinden.

Ferner ist im Rahmen der DE 101 15 987 der Anmelderin ein Mehrstufengetriebe mit mindestens sieben Gängen beschrieben. Dieses Getriebe besteht neben der Antriebswelle und der Abtriebswelle aus einem nicht schaltbaren Vorschaltradsatz und einem schaltbaren Nachschaltradsatz in Form eines Zweisteg-Vierwellen-Getriebes. Der Vorschaltradsatz besteht aus einem ersten Planetenradsatz, welcher neben der Eingangsdrehzahl der Antriebswelle eine zweite Drehzahl anbietet, die wahlweise auf einen Nachschaltradsatz geschaltet werden kann. Der Nachschaltradsatz besteht aus zwei schaltbaren Planetenradsätzen, welche mit den sechs Schaltelementen mindestens sieben Gänge schalten kann, wobei zwei Leistungswege gebildet werden. Dabei werden bei jedem Schaltvorgang in vorteilhafter Weise stets Gruppenschaltungen vermieden. Ein 9-Gang-Mehrstufengetriebe ist ferner aus der DE 29 36 969 bekannt; es umfasst acht Schaltelemente und vier Radsätze.

Aus der DE 102 44 023 A1 der Anmelderin ist ein Lastschaltgetriebe mit formschlüssigen und reibschlüssigen Schaltelementen beschrieben, bei dem die formschlüssigen Schaltelemente bei Hoch-Schaltungen abschaltend sein müssen, damit keine Schaltqualitätseinbussen auftreten.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in Pkw als auch Nkw geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Der vorliegenden Erfindung liegt die Aufgabe zugrunde, ein Mehrstufengetriebe der eingangs genannten Art vorzuschlagen, bei dem der Bauaufwand optimiert wird, der erforderliche Bauraum reduziert wird und zudem der Wirkungsgrad in den Hauptfahrgängen hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglichst gering gehalten werden. Außerdem soll das erfindungsgemäße Getriebe für jegliche Bauweise in ein Fahrzeug geeignet sein, insbesondere für eine Front-Quer-Anordnung.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches eine Antriebswelle und eine Abtriebswelle aufweist, welche in einem Gehäuse angeordnet sind. Des weiteren sind zumindest drei Planetensätze, im Folgenden als erster, zweiter und dritter Planetensatz bezeichnet, mindestens sieben drehbare Wellen - im Folgenden als Antriebswelle, Abtriebswelle, dritte, vierte, fünfte, sechste und siebte Welle bezeichnet - sowie sechs Schaltelemente, umfassend Bremsen und Kupplungen, vorgesehen, deren selektives Eingreifen verschiedene Übersetzungsverhältnisse zwischen der Antriebswelle und der Abtriebswelle bewirkt, so dass vorzugsweise sechs Vorwärtsgänge und ein Rückwärtsgang realisierbar ist. Erfindungsgemäß sind die Planetensätze vorzugsweise als Minus-Planetensätze ausgebildet.

Gemäß der Erfindung ist die Antriebswelle ständig mit dem Sonnenrad des zweiten Planetensatzes verbunden und über eine Kupplung mit der fünften Welle lösbar verbindbar, welche ständig mit dem Steg des dritten Planetensatzes verbunden, über eine Bremse an ein Gehäuse des Getriebes ankoppelbar und über eine weitere Kupplung mit der siebten Welle lösbar verbindbar ist, dadurch gekennzeichnet, dass die siebte Welle wiederum ständig mit dem Steg des zweiten Planetensatzes und dem Hohlrad des ersten Planetensatzes verbunden ist, wobei die sechste Welle ständig mit dem Sonnenrad des dritten Planetensatzes und dem Hohlrad des zweiten Planetensatzes verbunden und über eine weitere Kupplung mit der dritten Welle lösbar verbindbar ist, die ständig mit dem Steg des ersten Planetensatzes verbunden und über eine weitere Bremse an ein Gehäuse des Getriebes ankoppelbar ist. Die vierte Welle ist ständig mit dem Sonnenrad des ersten Planetensatzes verbunden und über eine weitere Bremse an ein Gehäuse G des Getriebes ankoppelbar. Erfindungsgemäß ist vorgesehen, dass die Abtriebswelle ständig mit dem Hohlrad des dritten Planetensatzes verbunden ist.

Gemäß einer besonders vorteilhaften Ausgestaltung der Erfindung ist die Kupplung, welche die dritte Welle mit der sechsten Welle lösbar verbindet als formschlüssiges Schaltelement ausgebildet. Des weiteren kann die Kupplung, welche die fünfte Welle mit der siebten Welle lösbar verbindet sowie die Bremse, über die die fünfte Welle an das Gehäuse ankoppelbar ist ebenfalls als formschlüssige Schaltelemente ausgeführt sein. Dies wird dadurch ermöglicht, dass gemäß der Erfindung diese Schaltelemente bei Hochschaltungen nur geöffnet und nie geschlossen werden.

Durch die erfindungsgemäße Ausgestaltung des Mehrstufengetriebes ergeben sich insbesondere für Personenkraftwagen geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, vorzugsweise drei Bremsen und drei Kupplungen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Darüber hinaus ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird; so ist es z.B. möglich, dass Antrieb und Abtrieb auf der gleichen Seite des Gehäuses vorgesehen sind.

Die Erfindung wird im Folgenden anhand der Zeichnungen beispielhaft näher erläutert.

In diesen stellen dar:
- Figur 1: eine schematische Darstellung einer bevorzugten Ausfüh- rungsform eines erfindungsgemäßen Mehrstufengetriebes, bei dem sieben Vorwärtsgänge realisierbar sind;
- Figur 2: ein beispielhaftes Schaltschema für das erfindungsgemäße Mehrstufengetriebe gemäß Figur 1 und
- Figur 3: eine schematische Darstellung einer bevorzugten Ausfüh- rungsform eines erfindungsgemäßen Mehrstufengetriebes, bei der drei formschlüssige Schaltelemente verwendet wer- den.

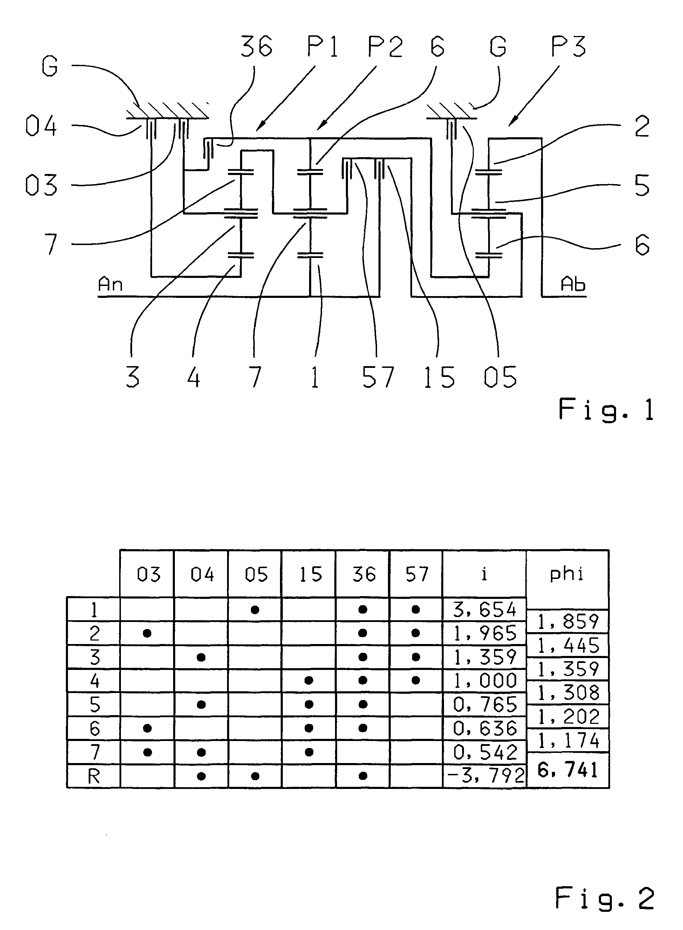

In Figur 1 ist ein erfindungsgemäßes Mehrstufengetriebe mit einer Antriebswelle 1 (An) und einer Abtriebswelle 2 (Ab) dargestellt, welche in einem Gehäuse G des Getriebes angeordnet sind. Es sind drei Planetensätze P1, P2, P3 vorgesehen, welche vorzugsweise als Minus-Planetensätze ausgebildet sind Bei der Ausführungsform gemäß Figur 1 sind die Planetensätze in der Reihenfolge P1, P2, P3 hintereinander in axialer Richtung angeordnet.

Wie aus Figur 1 ersichtlich, sind sechs Schaltelemente, nämlich drei Bremsen 03, 04, 05 und drei Kupplungen 15, 36 und 57 vorgesehen.

Mit diesen Schaltelementen ist ein selektives Schalten von sieben Vorwärtsgängen und einem Rückwärtsgang realisierbar. Das erfindungsgemäße Mehrstufengetriebe weist insgesamt sieben drehbare Wellen auf, nämlich die Wellen 1, 2, 3, 4, 5, 6 und 7.

Erfindungsgemäß ist bei dem Mehrstufengetriebe gemäß Figur 1 vorgesehen, dass der Antrieb durch die Welle 1 erfolgt, welche ständig mit dem Sonnenrad des zweiten Planetensatzes P2 verbunden und über eine Kupplung 15 mit der Welle 5 lösbar verbindbar ist, welche ständig mit dem Steg des dritten Planetensatzes P3 verbunden, über die Bremse 05 an das Gehäuse G ankoppelbar und über die Kupplung 57 mit einer Welle 7 lösbar verbindbar ist. Die Welle 7 ist ständig mit dem Steg des zweiten Planetensatzes P2 und dem Hohlrad des ersten Planetensatzes P1 verbunden, wobei eine Welle 6 ständig mit dem Sonnenrad des dritten Planetensatzes P3 und dem Hohlrad des zweiten Planetensatzes P2 verbunden und über eine Kupplung 36 mit der Welle 3 lösbar verbindbar ist, welche ständig mit dem Steg des ersten Planetensatzes P1 verbunden und über eine Bremse 03 an ein Gehäuse G des Getriebes ankoppelbar ist. Ferner ist eine Welle 4 vorgesehen, welche ständig mit dem Sonnenrad des ersten Planetensatzes P1 verbunden und über eine Bremse 04 an ein Gehäuse G des Getriebes ankoppelbar ist. Der Abtrieb erfolgt über die Welle 2, die ständig mit dem Hohlrad des dritten Planetensatzes P3 verbunden ist.

Bei der Ausführungsform gemäß Figur 1 sind die Kupplungen 15, 15 axial betrachtet zwischen dem zweiten und dem ersten Planetensatz angeordnet. Die räumliche Anordnung der Schaltelemente kann beliebig sein und wird nur durch die Abmessungen und die äußere Formgebung begrenzt.

In Figur 2 ist ein beispielhaftes Schaltschema für das erfindungsgemäße Mehrstufengetriebe gemäß Figur 1 dargestellt. Für jeden Gang werden drei Schaltelemente geschlossen. Dem Schaltschema können die jeweiligen Übersetzungen i der einzelnen Gangstufen und die daraus zu bestimmenden Stufensprünge phi beispielhaft entnommen werden. Aus Figur 2 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. Des weiteren ist der vierte Gang in vorteilhafter Weise als Direktgang ausgelegt.

Der erste Gang ergibt sich durch Schließen der Kupplungen 36, 57 und der Bremse 05, der zweite Gang durch Schließen der Kupplungen 36, 57 und der Bremse 03, der dritte Gang durch Schließen der Kupplungen 36, 57 und der Bremse 04 und der vierte Gang ergibt sich durch Schließen der Kupplungen 36, 57 und 15. Ferner ergibt sich der fünfte Gang durch Schließen der Kupplungen 15, 36 und der Bremse 04, der sechste Gang durch Schließen der Kupplungen 15, 36 und der Bremse 03 und der siebte Gang durch Schließen der Kupplung 15 und der Bremsen 03, 04.

Wie aus dem Schaltschema ersichtlich, ergibt sich der Rückwärtsgang durch Schließen der Bremsen 04, 05 und der Kupplung 36.

Hierbei ist erkennbar, dass die Schaltelemente 05, 36 und 57 bei den Hochschaltungen nur geöffnet und nie geschlossen werden. Dies bedeutet, dass bei konventionellen Lastschaltungen diese Schaltelemente im Lastübernahmepunkt nur geöffnet werden müssen. Aus diesem Grund können diese Schaltelemente als formschlüssige Schaltelemente, beispielsweise als Klauenkupplungen oder Synchronisierungen ausgeführt werden. Die Bremsen 03, 04 und die Kupplung 15 sind vorzugsweise als reibschlüssige Schaltelemente ausgeführt.

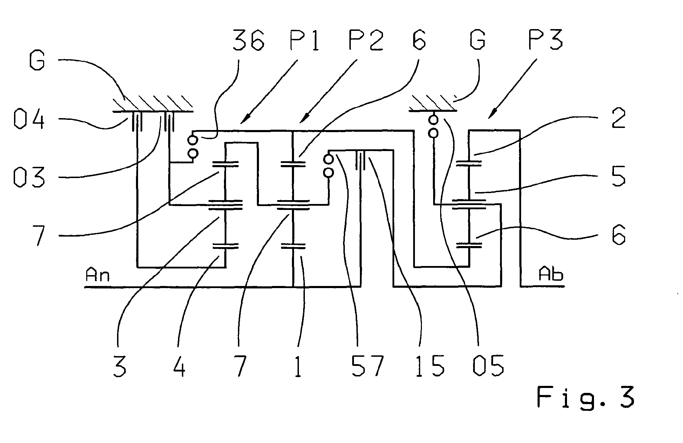

Ein derartig ausgebildetes Getriebe ist Gegenstand der Figur 3, wobei die formschlüssigen Schaltelemente durch Kreise angedeutet sind. Die Kopplungen und die Anordnung der Bauteile entspricht der Kopplungen und der Anordnung des Getriebes gemäß Figur 1. Des weiteren entspricht das Schaltschema für dieses Getriebe dem Schaltschema gemäß Figur 2.

Durch die Ausführung der Schaltelemente 05, 36 und 57 als formschlüssige Klauenkupplungen oder Synchronisierungen wird der Wirkungsgrad des Getriebes optimiert, da keine Schleppverluste in den formschlüssigen Schaltelementen im geöffneten Zustand auftreten. Beispielsweise sind im siebten Gang alle reibschlüssigen Schaltelemente geschlossen, weswegen im siebten Gang nur die Verzahnungen und gegebenenfalls Verbraucher, wie eine Hydraulikpumpe Verluste erzeugen.

Des weiteren wird eine kompaktere Bauweise ermöglicht, da die genannten formschlüssigen Schaltelemente im geschlossenen Zustand, insbesondere im ersten Gang und im Rückwärtsgang viel Drehmoment übertragen müssen; durch die formschlüssige Ausführung können diese Schaltelemente deutlich kompakter ausgeführt sein. Ein weiterer Vorteil besteht darin, dass aufgrund der formschlüssigen Ausführung von zwei Kupplungen die hydraulischen Drehüberträger zur Übergabe von Drucköl an die Kupplungen weniger aufwändig ausgeführt sein können.

Demnach ergibt sich ein Sieben-Gang-Getriebe mit geeigneter Stufungsreihe und - im Vergleich zum bekannten Stand der Technik - deutlich verringerten Verlusten bei kompakterer Bauweise und geringeren Kosten.

Ein derartiges Getriebe eignet sich insbesondere für Front-Quer-Antriebsstränge oder auch für die Verwendung in Nutzfahrzeugen, da die genannten vorteilhaften Eigenschaften bei derartigen Fahrzeugen gefordert werden.

Gemäß der Erfindung ist ein Anfahren mit einem integrierten Schaltelement möglich (IAK). Hierbei ist ein Schaltelement besonders geeignet, das im ersten Gang und im Rückwärtsgang ohne Drehrichtungsumkehr benötigt wird (Kupplung 36).

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind.

Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle
- 2: Welle
- 3: Welle
- 4: Welle
- 5: Welle
- 6: Welle
- 7: Welle
- 03: Bremse
- 04: Bremse
- 05: Bremse
- 15: Kupplung
- 36: Kupplung
- 57: Kupplung

- P1: Planetensatz
- P2: Planetensatz
- P3: Planetensatz
- i: Übersetzung
- phi: Stufensprung
- G: Gehäuse

## Patentansprüche

1. Mehrstufengetriebe in Planetenbauweise, insbesondere Automatgetriebe für ein Kraftfahrzeug, umfassend eine Antriebswelle (1) und eine Abtriebswelle (2), welche in einem Gehäuse (G) angeordnet sind, drei Planetensätze (P1, P2, P3), mindestens sieben drehbare Wellen (1, 2, 3, 4, 5, 6, 7) sowie sechs Schaltelemente (03, 04, 05, 15, 36, 57), umfassend Bremsen (03, 04, 05), und Kupplungen (15, 36, 57), deren selektives Eingreifen verschiedene Übersetzungsverhältnisse zwischen der Antriebswelle (1) und der Abtriebswelle (2) bewirkt, so dass sieben Vorwärtsgänge und ein Rückwärtsgang realisierbar sind, wobei die Antriebswelle (1) ständig mit dem Sonnenrad des zweiten Planetensatzes (P2) verbunden und über eine Kupplung (15) mit der fünften Welle (5) lösbar verbindbar ist, welche ständig mit dem Steg des dritten Planetensatzes (P3) verbunden, über eine Bremse (05) an das Gehäuse (G) ankoppelbar und über eine weitere Kupplung (57) mit der siebten Welle (7) lösbar verbindbar ist, **dadurch gekennzeichnet, dass** die siebte Welle (7) ständig mit dem Steg des zweiten Planetensatzes (P2) und dem Hohlrad des ersten Planetensatzes (P1) verbunden ist, dass, die sechste Welle (6) ständig mit dem Sonnenrad des dritten Planetensatzes (P3) und dem Hohlrad des zweiten Planetensatzes (P2) verbunden und über eine weitere Kupplung (36) mit der dritten Welle (3) lösbar verbindbar ist, welche ständig mit dem Steg des ersten Planetensatzes (P1) verbunden und über eine weitere Bremse (03) an das Gehäuse (G) des Getriebes ankoppelbar ist, dass die vierte Welle (4) ständig mit dem Sonnenrad des ersten Planetensatzes (P1) verbunden und über eine weitere Bremse (04) an das Gehäuse (G) des Getriebes ankoppelbar ist und dass die Abtriebswelle (2) ständig mit dem Hohlrad des dritten Planetensatzes (P3) verbunden ist.

2. Mehrstufengetriebe nach Anspruch 1, **dadurch gekennzeichnet, dass** die Kupplungen (57) und (15) axial betrachtet im Wesentlichen zwischen dem zweiten und dem dritten Planetensatz (P2, P3) angeordnet sind.

3. Mehrstufengetriebe nach Anspruch 1 oder 2, **dadurch gekennzeichnet, dass** die Bremse (05) und die Kupplungen (36) und (57) als formschlüssige Schaltelemente ausgeführt sind und dass die Bremsen (03, 04) und die Kupplung (15) als reibschlüssige Schaltelemente ausgeführt sind.

4. Mehrstufengetriebe nach einem der vorangehenden Ansprüche, **dadurch gekennzeichnet, dass** die Planetensätze (P1, P2, P3) als Minus-Planetensätze ausgebildet sind.

5. Mehrstufengetriebe nach einem der vorangehenden Ansprüche, **dadurch gekennzeichnet, dass** sich der erste Gang durch Schließen der Kupplungen (36) und (57) und der Bremse (05), der zweite Gang durch Schließen Kupplungen (36) und (57) und der Bremse (03), der dritte Gang durch Schließen der Kupplungen (36) und (57) und der Bremse (04), der vierte Gang durch Schließen der Kupplungen (36), (57) und (15), der fünfte Gang durch Schließen der Kupplungen (15) und (36) und der Bremse (04), der sechste Gang durch Schließen der Kupplungen (15) und (36) und der Bremse (03) und der siebte Gang durch Schließen der Kupplungen (15) und der Bremsen (04) und (05) ergibt.

6. Mehrstufengetriebe nach einem der vorangehenden Ansprüche, **dadurch gekennzeichnet, dass** sich der Rückwärtsgang durch Schließen der Bremsen (04) und (05) und der Kupplung (36) ergibt.

7. Mehrstufengetriebe nach einem der vorangehenden Ansprüche, **dadurch gekennzeichnet, dass** an jeder geeigneten Stelle zusätzliche Freiläufe einsetzbar sind.

8. Mehrstufengetriebe nach Anspruch 7, **dadurch gekennzeichnet, dass** die Freiläufe zwischen den Wellen (1, 2, 3, 4, 5, 6, 7) und dem Gehäuse (G) vorgesehen sind.

9. Mehrstufengetriebe nach einem der vorstehenden Ansprüche, **dadurch gekennzeichnet, dass** Antrieb und Abtrieb auf der gleichen Seite des Gehäuses vorgesehen sind.

10. Mehrstufengetriebe nach einem der vorstehenden Ansprüche, **dadurch gekennzeichnet, dass** ein Achs- und/oder ein Verteilerdifferential auf der Antriebsseite oder der Abtriebsseite angeordnet ist.

11. Mehrstufengetriebe nach einem der vorstehenden Ansprüche, **dadurch gekennzeichnet, dass** die Antriebswelle (1) durch ein Kupplungselement von einem Antriebs-Motor trennbar ist.

12. Mehrstufengetriebe nach Anspruch 11, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

13. Mehrstufengetriebe nach einem der vorstehenden Ansprüche, **dadurch gekennzeichnet, dass** in Kraftflussrichtung hinter dem Getriebe ein externes Anfahrelement, insbesondere nach Anspruch 11 oder 12, anordbar ist, wobei die Antriebswelle (1) fest mit der Kurbelwelle des Motors verbunden ist.

14. Mehrstufengetriebe nach einem der vorstehenden Ansprüche, **dadurch gekennzeichnet, dass** das Anfahren mittels eines Schaltelements (36) des Getriebes erfolgt, wobei die Antriebswelle (1) ständig mit der Kurbelwelle des Motors verbunden ist.

15. Mehrstufengetriebe nach einem der vorstehenden Ansprüche, **dadurch gekennzeichnet, dass** zwischen Motor und Getriebe ein Torsionsschwingungsdämpfer anordbar ist.

16. Mehrstufengetriebe nach einem der vorstehenden Ansprüche, **dadurch gekennzeichnet, dass** auf jeder Welle eine verschleißfreie Bremse anordbar ist.

17. Mehrstufengetriebe nach einem der vorstehenden Ansprüche, **dadurch gekennzeichnet, dass** zum Antrieb von zusätzlichen Aggregaten auf jeder Welle ein Nebenabtrieb anordbar ist.

18. Mehrstufengetriebe nach Anspruch 17, **dadurch gekennzeichnet, dass** der Nebenabtrieb auf der Antriebswelle (1) oder der Abtriebswelle (2) anordbar ist.

19. Mehrstufengetriebe nach einem der vorstehenden Ansprüche, **dadurch gekennzeichnet, dass** die Schaltelemente als lastschaltende Kupplungen oder Bremsen ausgebildet sind.

20. Mehrstufengetriebe nach Anspruch 19, **dadurch gekennzeichnet, dass** Lamellenkupplungen, Bandbremsen und/oder Konuskupplungen einsetzbar sind.

21. Mehrstufengetriebe nach einem der Ansprüche 1 bis 18, **dadurch gekennzeichnet, dass** als Schaltelemente formschlüssige Bremsen und/oder Kupplungen vorgesehen sind.

22. Mehrstufengetriebe nach einem der vorangehenden Ansprüche, **dadurch gekennzeichnet, dass** auf jeder Welle als Generator und/oder als zusätzliche Antriebsmaschine eine elektrische Maschine anbringbar ist.

## Claims

1. Planetary-type multi-stage gearbox, in particular automatic gearbox for a motor vehicle, comprising a drive input shaft (1) and a drive output shaft (2) which are arranged in a housing (G), three planet sets (P1, P2, P3), at least seven rotatable shafts (1, 2, 3, 4, 5, 6, 7) and also six shift elements (03, 04, 05, 15, 36, 57) comprising brakes (03, 04, 05) and clutches (15, 36, 57), the selective engagement of which generates different transmission ratios between the drive input shaft (1) and the drive output shaft (2) such that seven forward gears and one reverse gear can be realized, with the drive input shaft (1) being permanently connected to the sun gear of the second planet set (P2) and being detachably connectable via a clutch (15) to the fifth shaft (5) which is permanently connected to the web of the third planet set (P3), which can be coupled via a brake (05) to the housing (G) and which is detachably connectable via a further clutch (57) to the seventh shaft (7), **characterized in that** the seventh shaft (7) is permanently connected to the web of the second planet set (P2) and to the internal gear of the first planet set (P1), **in that** the sixth shaft (6) is permanently connected to the sun gear of the third planet set (P3) and to the internal gear of the second planet set (P2) and is detachably connectable via a further clutch (36) to the third shaft (3) which is permanently connected to the web of the first planet set (P1) and can be coupled via a further brake (03) to the housing (G) of the gearbox, **in that** the fourth shaft (4) is permanently connected to the sun gear of the first planet set (P1) and can be coupled via a further brake (04) to the housing (G) of the gearbox, and **in that** the drive output shaft (2) is permanently connected to the internal gear of the third planet set (P3).

2. Multi-stage gearbox according to Claim 1, **characterized in that** the clutches (57) and (15) are arranged substantially between the second and third planet sets (P2, P3) as viewed axially.

3. Multi-stage gearbox according to Claim 1 or 2, **characterized in that** the brake (05) and the clutches (36) and (57) are designed as positively locking shift elements and **in that** the brakes (03, 04) and the clutch (15) are designed as non-positively locking shift elements.

4. Multi-stage gearbox according to one of the preceding claims, **characterized in that** the planet sets (P1, P2, P3) are designed as minus planet sets.

5. Multi-stage gearbox according to one of the preceding claims, **characterized in that** the first gear is generated by closing the clutches (36) and (57) and the brake (05), the second gear is generated by closing clutches (36) and (57) and the brake (03), the third gear is generated by closing the clutches (36) and (57) and the brake (04), the fourth gear is generated by closing the clutches (36), (57) and (15), the fifth gear is generated by closing the clutches (15) and (36) and the brake (04), the sixth gear is generated by closing the clutches (15) and (36) and the brake (03), and the seventh gear is generated by closing the clutch (15) and the brakes (04) and (05).

6. Multi-stage gearbox according to one of the preceding claims, **characterized in that** the reverse gear is generated by closing the brakes (04) and (05) and the clutch (36).

7. Multi-stage gearbox according to one of the preceding claims, **characterized in that** additional freewheels can be used at any suitable point.

8. Multi-stage gearbox according to Claim 7, **characterized in that** the freewheels are provided between the shafts (1, 2, 3, 4, 5, 6, 7) and the housing (G).

9. Multi-stage gearbox according to one of the preceding claims, **characterized in that** the drive input and drive output are provided on the same side of the housing.

10. Multi-stage gearbox according to one of the preceding claims, **characterized in that** an axle differential and/or an interaxle differential is arranged on the drive input side or the drive output side.

11. Multi-stage gearbox according to one of the preceding claims, **characterized in that** the drive input shaft (1) can be separated from a drive engine by a clutch element.

12. Multi-stage gearbox according to Claim 11, **characterized in that** a hydrodynamic converter, a hydraulic clutch, a dry-running starting clutch, a wet-running starting clutch, a magnetic-powder clutch or a centrifugal clutch is provided as a clutch element.

13. Multi-stage gearbox according to one of the preceding claims, **characterized in that** an external starting element, in particular according to Claim 11 or 12, can be arranged downstream of the gearbox in the power flow direction, with the drive input shaft (1) being fixedly connected to the crankshaft of the engine.

14. Multi-stage gearbox according to one of the preceding claims, **characterized in that** starting is carried out by means of a shift element (36) of the gearbox, with the drive input shaft (1) being permanently connected to the crankshaft of the engine.

15. Multi-stage gearbox according to one of the preceding claims, **characterized in that** a torsional vibration damper can be arranged between the engine and gearbox.

16. Multi-stage gearbox according to one of the preceding claims, **characterized in that** a nonwearing brake can be arranged on each shaft.

17. Multi-stage gearbox according to one of the preceding claims, **characterized in that** an auxiliary drive can be arranged on each shaft for the drive of additional units.

18. Multi-stage gearbox according to Claim 17, **characterized in that** the auxiliary drive can be arranged on the drive input shaft (1) or the drive output shaft (2).

19. Multi-stage gearbox according to one of the preceding claims, **characterized in that** the shift elements are designed as powershifting clutches or brakes.

20. Multi-stage gearbox according to Claim 19, **characterized in that** multiplate clutches, band brakes and/or conical clutches can be used.

21. Multi-stage gearbox according to one of Claims 1 to 18, **characterized in that** positively locking brakes and/or clutches are provided as shift elements.

22. Multi-stage gearbox according to one of the preceding claims, **characterized in that** an electric machine can be attached to each shaft as a generator and/or as an additional drive.

## Revendications

1. Transmission à rapports multiples de construction planétaire, en particulier transmission automatique pour un véhicule automobile, comprenant un arbre d'entraînement (1) et un arbre de sortie (2), qui sont disposés dans un boîtier (G), trois trains planétaires (P1, P2, P3), au moins sept arbres rotatifs (1, 2, 3, 4, 5, 6, 7) ainsi que six éléments de changement de vitesse (03, 04, 05, 15, 36, 57), comprenant des freins (03, 04, 05) et des embrayages (15, 36, 57) dont l'engagement sélectif provoque différents rapports de multiplication entre l'arbre d'entraînement (1) et l'arbre de sortie (2), de sorte que sept vitesses de marche avant et une vitesse de marche arrière puissent être réalisées, l'arbre d'entraînement (1) étant connecté de manière permanente à la roue solaire du deuxième train planétaire (P2) et pouvant être connecté de manière amovible par le biais d'un embrayage (15) au cinquième arbre (5), lequel est connecté de manière permanente au porte-satellites du troisième train planétaire (P3), peut être accouplé au boîtier (G) par le biais d'un frein (05) et peut être connecté de manière amovible par le biais d'un autre embrayage (57) au septième arbre (7), **caractérisée en ce que** le septième arbre (7) est connecté de manière permanente au porte-satellites du deuxième train planétaire (P2) et à la couronne du premier train planétaire (P1), **en ce que** le sixième arbre (6) est connecté de manière permanente à la roue solaire du troisième train planétaire (P3) et à la couronne du deuxième train planétaire (P2), et peut être connecté de manière amovible par le biais d'un autre embrayage (36) au troisième arbre (3), qui est connecté de manière permanente au porte-satellites du premier train planétaire (P1) et qui peut être accouplé par le biais d'un autre frein (03) au boîtier (G) de la transmission, **en ce que** le quatrième arbre (4) est connecté de manière permanente à la roue solaire du premier train planétaire (P1) et peut être accouplé par le biais d'un autre frein (04) au boîtier (G) de la transmission, et **en ce que** l'arbre de sortie (2) est connecté de manière permanente à la couronne du troisième train planétaire (P3).

2. Transmission à rapports multiples selon la revendication 1, **caractérisée en ce que** les embrayages (57) et (15), considérés axialement, sont disposés essentiellement entre le deuxième et le troisième train planétaire (P2, P3).

3. Transmission à rapports multiples selon la revendication 1 ou 2, **caractérisée en ce que** le frein (05) et les embrayages (36) et (57) sont réalisés sous forme d'éléments de changement de vitesse par engagement positif et **en ce que** les freins (03, 04) et l'embrayage (15) sont réalisés sous forme d'éléments de changement de vitesse à engagement par friction.

4. Transmission à rapports multiples selon l'une quelconque des revendications précédentes, **caractérisée en ce que** les trains planétaires (P1, P2, P3) sont réalisés sous forme de trains planétaires négatifs.

5. Transmission à rapports multiples selon l'une quelconque des revendications précédentes, **caractérisée en ce que** la première vitesse est obtenue par fermeture des embrayages (36) et (57) et du frein (05), la deuxième vitesse est obtenue par fermeture des embrayages (36) et (57) et du frein (03), la troisième vitesse est obtenue par fermeture des embrayages (36) et (57) et du frein (04), la quatrième vitesse est obtenue par fermeture des embrayages (36), (57) et (15), la cinquième vitesse est obtenue par fermeture des embrayages (15) et (36) et du frein (04), la sixième vitesse est obtenue par fermeture des embrayages (15) et (36) et du frein (03) et la septième vitesse est obtenue par fermeture de l'embrayage (15) et des freins (04) et (05).

6. Transmission à rapports multiples selon l'une quelconque des revendications précédentes, **caractérisée en ce que** la vitesse de marche arrière est obtenue par fermeture des freins (04) et (05) et de l'embrayage (36).

7. Transmission à rapports multiples selon l'une quelconque des revendications précédentes, **caractérisée en ce que** l'on peut insérer des roues libres supplémentaires en chaque emplacement approprié.

8. Transmission à rapports multiples selon la revendication 7, **caractérisée en ce que** les roues libres sont prévues entre les arbres (1, 2, 3, 4, 5, 6, 7) et le boîtier (G).

9. Transmission à rapports multiples selon l'une quelconque des revendications précédentes, **caractérisée en ce que** l'entraînement et la sortie sont prévus sur le même côté du boîtier.

10. Transmission à rapports multiples selon l'une quelconque des revendications précédentes, **caractérisée en ce qu'**un différentiel d'essieu et/ou intermédiaire est disposé sur le côté d'entraînement ou le côté de sortie.

11. Transmission à rapports multiples selon l'une quelconque des revendications précédentes, **caractérisée en ce que** l'arbre d'entraînement (1) peut être séparé d'un moteur d'entraînement par un élément d'embrayage.

12. Transmission à rapports multiples selon la revendication 11, **caractérisée en ce que** l'on prévoit comme élément d'embrayage un convertisseur hydrodynamique, un embrayage hydraulique, un embrayage de démarrage sec, un embrayage de démarrage humide, un embrayage à poudre magnétique ou un embrayage à force centrifuge.

13. Transmission à rapports multiples selon l'une quelconque des revendications précédentes, **caractérisée en ce que** l'on peut disposer dans la direction du flux de force derrière la transmission un élément de démarrage externe, notamment selon la revendication 11 ou 12, l'arbre d'entraînement (1) étant connecté fixement au vilebrequin du moteur.

14. Transmission à rapports multiples selon l'une quelconque des revendications précédentes, **caractérisée en ce que** le démarrage a lieu au moyen d'un élément de changement de vitesse (36) de la transmission, l'arbre d'entraînement (1) étant connecté de manière permanente au vilebrequin du moteur.

15. Transmission à rapports multiples selon l'une quelconque des revendications précédentes, **caractérisée en ce que** l'on peut disposer un amortisseur des vibrations de torsion entre le moteur et la transmission.

16. Transmission à rapports multiples selon l'une quelconque des revendications précédentes, **caractérisée en ce que** l'on peut disposer sur chaque arbre un frein sans usure.

17. Transmission à rapports multiples selon l'une quelconque des revendications précédentes, **caractérisée en ce que** pour l'entraînement d'équipements supplémentaires, on peut disposer sur chaque arbre une prise de force auxiliaire.

18. Transmission à rapports multiples selon la revendication 17, **caractérisée en ce que** la prise de force auxiliaire peut être disposée sur l'arbre d'entraînement (1) ou l'arbre de sortie (2).

19. Transmission à rapports multiples selon l'une quelconque des revendications précédentes, **caractérisée en ce que** les éléments de changement de vitesse sont réalisés sous forme d'embrayages à commutation de charge ou sous forme de freins.

20. Transmission à rapports multiples selon la revendication 19, **caractérisée en ce que** l'on peut utiliser des embrayages à disques, des freins à bande et/ou des embrayages coniques.

21. Transmission à rapports multiples selon l'une quelconque des revendications 1 à 18, **caractérisée en ce que** l'on prévoit des freins et/ou des embrayages à engagement positif en tant qu'éléments de changement de vitesse.

22. Transmission à rapports multiples selon l'une quelconque des revendications précédentes, **caractérisée en ce que** l'on peut monter sur chaque arbre en tant que générateur et/ou en tant que machine d'entraînement supplémentaire une machine électrique.
